# EUROPEAN PATENT SPECIFICATION

(11) **EP 2 492 128 B1**
(45) Date of publication and mention of the grant of the patent: **07.08.2013**
(21) Application number: 11155277.4
(22) Date of filing: 22.02.2011
(51) Int. Cl.: B60K 15/035, B60K 15/04

(54) **Ammonia precursor storage system including a semi-permeable membrane**
Ammoniak-Vorläufer-Aufbewahrungssystem mit semipermeabler Membran
Système de stockage de précurseur d'ammoniac incluant une membrane semi-perméable

(43) Date of publication of application: 29.08.2012
(73) Proprietor: Inergy Automotive Systems Research (Société Anonyme), 1120 Bruxelles (BE)
(72) Inventor: Georis, Philippe Lucien Valmy, 60350 Chelles (FR); Le Clec'h, Nicolas, 60280 Margny les Compiegne (FR)
(74) Representative: de la Bigne, Guillaume Michel Marie

(56) References cited:
- WO-A1-2011/001256
- US-A- 4 853 013
- US-A1- 2005 098 160
- US-A1- 2006 096 258
- US-A1- 2007 175 514

## Description

### Background of the invention

### Field of the Invention

The present application relates to a storage system for an ammonia precursor including a semi-permeable membrane.

### Description of the Related Art

Laws governing passenger and utility vehicle emissions require, in part, a reduction of the nitrogen oxide (NOₓ) released into the atmosphere. This goal may be achieved by the SCR (Selective Catalytic Reduction) process, which serves to reduce the nitrogen oxides by injecting a reducing agent, generally ammonia, into the exhaust line. This ammonia may be produced by the thermolytic decomposition of a solution of an ammonia precursor whereof the concentration may be eutectic. Such an ammonia precursor can be a urea solution, for example.

With the SCR process, the high NOₓ releases produced in the engine during combustion at optimized efficiency are treated at the engine outlet in a catalyst. This treatment requires the use of the reducing agent in a precise concentration and in an extreme quality. The solution is thus accurately metered and injected into the exhaust gas stream, where it is hydrolysed, before converting the nitrogen oxide (NOₓ) to nitrogen (N₂) and water (H₂O).

For this purpose, vehicles may be equipped with a tank containing an aqueous urea solution and with a device for metering and injecting the desired quantity of additive into the exhaust line.

Besides being able of being filled, urea tanks must generally be ventilated when they reach a certain threshold pressure and/or vacuum. Accordingly, urea tanks can be equipped with pressure control valving, such as a double valve system (i.e. a system incorporating 2 valve elements: one capable of taking care of over pressure situations and one capable of taking care of under pressure (vacuum) situations) to facilitate the venting. Utilizing a double valve system limits excess pressure in the tank which can be caused by an increase in temperature, freezing of the urea solution, or a decrease in atmospheric pressure. Utilizing a double valve system also limits excess depression in the tank caused by a reduction in temperature, thawing of the urea solution, an increase in the atmospheric pressure, or consumption of the urea solution.

The Applicant found out that a venting valve including a moving part can be blocked by the crystallization of the urea solution after the zone of sealing of the valve becomes wet from the urea solution. Thus, the valve can be difficult to open or close, resulting in poor pressure control.

The Applicant hence had the idea to replace such a valve with a semi-permeable membrane configured to block liquid from the ammonia precursor and configured to allow air and vapours from the ammonia precursor to pass there through. Preferably, choice is made of a specific membrane which is not affected in its performances by urea crystallisation.

However, when such a membrane is used as venting device, it is advantageously combined with an OFP (Over Filling Prevention) device (since generally, the pressure build up will be very limited, typically: of about 10 mbar only, so that the filler nozzle will not automatically shut off at the end of refilling) which adds to the cost and technical complexity (resistance to crystallization, process, packaging) of the system.

In order to avoid the use of such a device, the Applicant had the idea to include said membrane inside the cap of the filler pipe so that during filling, the tank is not ventilated and pressure can build up. Besides, by doing so, the venting function becomes serviceable (easy to replace when damaged) what is highly appreciated by the car manufacturers since the complete tank has not to be changed in case of venting component failure.

The use of such a venting membrane is known for fuel tanks (see for instance US 2006/0096258 and the genericUS 2007/0175514) but up till now, it has never been used (or suggested for use) on SCR tanks, namely because membranes compatible with urea applications are not common on the market.

It is worth noting that the latter (US 2007/0175514) proposes to incorporate the membrane into the filler pipe cap but since said cap is provided with a cover having a small size venting hole providing only a limited communication between the inside and the outside of the tank, a substantial amount of pressure build-up occurs in service, requiring mechanical reinforcing means (over sizing of wall thickness, specific shapes & reinforcements etc.) adding again cost (and weight) to the system.

### Summary of the invention

The present invention aims at providing a system for storing an ammonia precursor which allows venting in service while still having a reduced weight, being robust, cheap and easily serviceable.

Therefore, the present invention concerns a system for storing an ammonia precursor, comprising:
- a tank configured to hold the ammonia precursor,
- a filler opening closed by a cap, said cap being removable for refilling the tank; and
- a semi-permeable membrane positioned within said cap,
wherein the semi-permeable membrane is configured to block liquid from the ammonia precursor and configured to allow air and vapours from the ammonia precursor to pass there through when the cap is closing the filler opening, and wherein when the cap is closing the filler opening, a pathway allowing a substantial amount of vapours to escape from the tank to the atmosphere is provided so that the total internal volume of the reservoir (1) divided by the flow rate through the membrane at 10 mbar (1/h) is lower than 20 h.

The system of the invention comprises a tank (storage volume delimited by a wall), preferably made of plastic material (polyethylene for instance), and which comprises a filler opening provided with a cap integrating a semi-permeable membrane.

The filler opening may be a mere opening in the tank wall i.e. a mere passageway, or it may be the upper part of a filler pipe (which is generally the case in practice). Generally, the cap capable of closing said opening comprises a device allowing it to be fixed on said opening. A portion in relief cooperating with a corresponding portion in relief on the filler pipe gives good results. In practice, corresponding threaded portions on the cap and on the filler pipe are convenient since generally, filler pipe and cap are moulded from plastic material.

Hence, according to a preferred embodiment of the invention, the tank is made of plastic material and comprises a filler pipe comprising the filler opening, the filler pipe and the cap being moulded from plastic material and comprising corresponding threaded portions.

According to the invention, the semi-permeable membrane is configured to block liquid but to allow ammonia vapours to pass there through without any substantial pressure build-up. This means that preferably, the semi-permeable membrane is configured to allow no more than 100 mbar over pressure, more preferably not more than 50 mbar or even more preferably: not more than 10 mbar overpressure will occur in service.

To that end, generally, a pathway allowing a substantial amount of vapours to escape from the tank to the atmosphere must be provided. In practice, said pathway is sized according the following rule: the total internal volume of the reservoir (1) divided by the flow rate through the membrane at 10 mbar (1/h) is lower than 20 h, preferably lower than 15h and even more preferably, lower than 10 h.

The semi-permeable membrane can comprise a suitable textile or other known porous material. For example, the semi-permeable membrane may be comprised of a Polytetrafluoroethylene (PTFE) based material (or may comprise sintered PTFE) or another perfluorated polymer. However, alternative materials that are hydrophobic, or water repellent, may be suitable, like for instance membranes or fabrics available under the commercial name GORE-TEX^{®}.

The semi-permeable membrane preferably includes openings ranging in size from 0.05 µm to 10 µm. Further, a thickness of the semi-permeable membrane is preferably from 50 µm to 250 µm. Especially membranes of the commercial type AM1XX from GORE (having opening diameter about 0.07 µm and thickness about 200 µm) give good results in practice.

In a preferred embodiment, the semi-permeable membrane is free of any non-hydrophobic material. In a preferred embodiment, the membrane is free of any material that is wetted by water or polar liquids, metal meshes, polyamide membrane, glass fiber, or glass based membrane.

Generally, according to the invention, the cap is a part comprising a body which is preferable made by injection moulding a plastic material, and which preferably comprises a threaded portion (see above). This body generally is a hollow part comprising a bore defining a generally cylindrical passage which is "obturated" by the membrane (i.e. where the membrane is fixed generally substantially perpendicularly to its axis so as to occupy a complete section thereof).

The semi-permeable membrane may be fixed to the cap by welding, for example, by thermal or (ultra)sonic welding. The welding width should be large enough to ensure a proper anchoring of the membrane into the cap to prevent leakage even after ageing on vehicle. It is highly recommended to use a cross section (i.e. a kind of grid to support the membrane) in order to avoid membrane stretching over the time, especially for membranes with a diameter higher than 15mm. For very large membranes, these are preferably supported and fixed to the support (for instance by welding) every 15mm.

In a preferred embodiment of the invention, the cap comprises a membrane holder or kind of hollow ring (the membrane generally being circular although other shapes may be used) eventually reinforced by ribs or spokes, to which the membrane is peripherally welded, said membrane holder being in turn fixed in the body of the cap, preferably by welding as well. Preferably, said membrane holder incorporates the above mentioned membrane support for large membranes, when required.

Preferably, the cap incorporates a seal in order to obtain a leak tight fixation of the cap on the filler opening. Although this seal may have the (classical) shape of an O-ring or the like, according to a preferred embodiment of the invention, this seal is a flat, circular seal comprising small orifices. This embodiment prevents access to the membrane by the user and hence, prevents the membrane from being damaged.

In order for the seal to be able to act as such and to be compressed when the cap is mounted on the filler opening, the cap preferably comprises an undercut on which said seal can be compressed. Especially in the case the body of the cap is injection molded, this undercut may comprise a horizontal surface and hence, could provide a liquid stagnation zone below the membrane. In order to avoid that, use can be made of an inner conical surface, providing an inclined conical surface between the membrane and the undercut so that said stagnation zone is avoided. This inner conical surface can be on a ring fixed as a separate part inside the cap. Alternatively, the cap can be molded in one piece with such an inner conical surface. This solution is generally preferred on an industrial scale.

Finally, in order to protect the (membrane of) the cap during its shipping and during its mounting on the filler opening (where torsion could deform and damage the cap), it may be advantageous to use a cover, mechanically fixed on the top of the cap but in a non leak tight manner so that the required vapor pathway can be obtained. To that end, the cover preferably comprises at least one opening and even more preferably, said opening is in the shape of a slit. Advantageously, said opening is in the lateral wall of the cover so that no dust or dirt can foul the membrane.

In practice, good results are obtained with the present invention if the pressure drop through the pathway downstream of the membrane is at least 20 (preferably 15 and even more preferably, 10) times less than the pressure drop across the membrane.

As to the materials used for the parts of the system according to the invention, they are preferably:
- polyethylene (and preferably HDPE of high density polyethylene) for the tank wall
- polyamide (PA, like PA 6 for instance) or polyacetal and preferably, POM (or poly-oxy-methylene) for the cap (and the cover, the case being), the former being more interesting economically speaking while the latter might be better for its chemical resistance (not only directly towards urea/ammonia corrosion but also, towards corrosion from substances issuing from the corrosion of other parts of the system, for instance, PVC parts which can release HCl).

The ammonia precursor is advantageously in aqueous solution. The invention gives good results with aqueous solutions of urea and in particular, eutectic solutions of urea and water such as solutions of AdBlue^{®} of which the urea content is between 31.8% and 33.2% by weight and which contain around 18% of ammonia. The invention may also be applied to urea/ammonium formate mixtures in aqueous solution, sold under the trademark Denoxium^{®} and which contain around 13% of ammonia. The latter have the advantage, with respect to urea, of only freezing from -35°C onwards (as opposed to -11°C), but have the disadvantages of corrosion problems linked to the release of formic acid.

### Brief description of the drawings

A more complete appreciation of the invention and many of the attendant advantages thereof will be readily obtained as the same becomes better understood by reference to the following detailed description when considered in connection with the accompanying drawings, wherein:

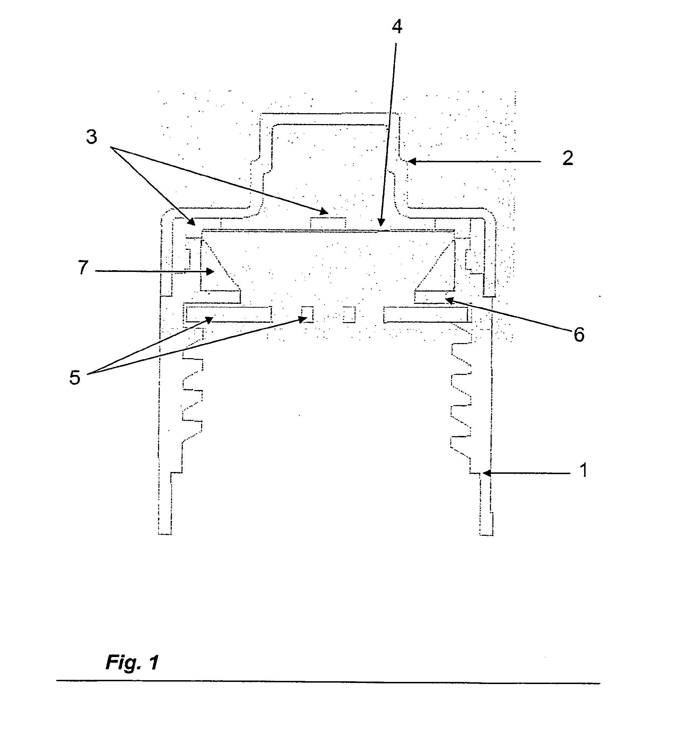

Figure 1 shows a schematic view of a cut through a cap of a system according to the invention, along a vertical plane comprising the axis of said cap; and

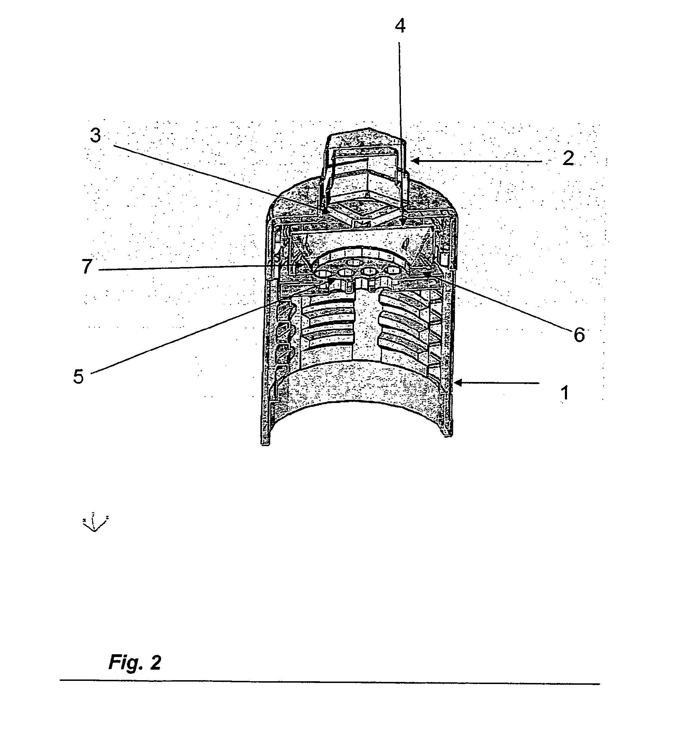

Figure 2 shows a three dimensional (or CAD) view of said cap (cut in a half).

### Detailed description of the preferred embodiments

In the drawings, same numerical references designate identical or corresponding parts, namely:
1. a cap with a threaded portion intended to be screwed on a corresponding threaded portion of a filler pipe of a tank (not shown)
2. a cover mechanically fixed (in any known manner like quick connect or the like) on top of said cap and giving it enough mechanical strength to withstand torsion during its screwing on the filler pipe
3. a membrane holder having a frame in the shape of a cross acting as a support for the inner (non welded) part of the membrane
4. a membrane with adequate breathing properties and ammonia resistance
5. a circular flat seal with circular openings
6. an undercut against which said seal can be compressed when the cap is mounted on the filler pipe
7. a ring providing an inner conical surface inside the cap between the membrane and the undercut

## Claims

1. A system for storing an ammonia precursor, comprising:
- a tank configured to hold the ammonia precursor,
- a filler opening closed by a cap (1), said cap (1) being removable for refilling the tank; and
- a semi-permeable membrane (4) positioned within said cap (1),
wherein the semi-permeable membrane (4) is configured to block liquid from the ammonia precursor and configured to allow air and vapours from the ammonia precursor to pass there through when the cap (1) is closing the filler opening, and **characterized in that** when the cap (1) is closing the filler opening, a pathway allowing a substantial amount of vapours to escape from the tank to the atmosphere is provided so that the total internal volume of the reservoir 1 divided by the flow rate ℓ/h through the membrane at 10 mbar is lower than 20 h.

2. The system according to the preceding claim, wherein the tank is made of plastic material and comprises a filler pipe comprising the filler opening, the filler pipe and the cap (1) being moulded from plastic material and comprising corresponding threaded portions.

3. The system according to any of the preceding claims, wherein the semi-permeable membrane (4) is configured to allow no more than 100 mbar over pressure.

4. The system according to any of the preceding claims, in which the semi-permeable membrane (4) comprises a fabric available under the commercial name GORE-TEX^{®}.

5. The system according to any of the preceding claims, wherein the semi-permeable membrane (4) includes openings ranging in size from 0.05 µm to 10 µm and has a thickness of from 50 µm to 250 µm.

6. The system according to any of the preceding claims, wherein the semi-permeable membrane (4) is fixed to the cap by welding.

7. The system according to any of the preceding claims, in which the cap (1) comprises a body which is a hollow part having a bore defining a generally cylindrical passage where the membrane (4) is fixed substantially perpendicularly to its axis so as to occupy a complete section thereof.

8. The system according to the preceding claim, wherein the cap (1) comprises a membrane holder to which the membrane (4) is peripherally welded, said membrane holder (4) being in turn fixed in the body of the cap (1), preferably by welding as well.

9. The system according to any of the preceding claims, wherein the cap (1) incorporates a flat, circular seal (5) comprising small orifices.

10. The system according to the preceding claim, wherein the cap comprises an undercut (6) on which the seal (5) an be compressed and an inner conical surface providing an inclined conical surface between the membrane and the undercut (6).

11. The system according to any of the preceding claims, comprising a cover mechanically fixed on the top of the cap (1).

12. The system according to the preceding claim, wherein the cover comprises at least one opening in the shape of a slit.

13. The system according to the preceding claim, wherein said opening is in the lateral wall of the cover.

14. The system according to any of the preceding claims, wherein the pressure drop through the vapor pathway downstream of the membrane is at least 20, preferably 15 and even more preferably, 10 times less than the pressure drop across the membrane.

15. The system according to any of the preceding claims, wherein the tank has a wall made of polyethylene, preferably HDPE of high density polyethylene, and wherein the cap, the cover, and the case are made of polyamide, like PA 6 for instance or polyacetal and preferably, POM or poly-oxy-methylene.

## Patentansprüche

1. System zum Speichern eines Ammoniakvorprodukts, aufweisend:
- einen Tank, der dazu ausgelegt ist, das Ammoniakvorprodukt zu halten,
- eine Füllöffnung, die durch eine Kappe (1) verschlossen ist, wobei die Kappe (1) entfernbar ist zum Wiederbefüllen des Tanks; und
- eine semi-permeable Membran (4), die in der Kappe (1) positioniert ist,
wobei die semi-permeable Membran (4) dazu ausgelegt ist, Flüssigkeit von dem Ammoniakvorprodukt zu blockieren und dazu ausgelegt ist, Luft und Dämpfen aus dem Ammoniakvorprodukt zu erlauben, durch diese hindurch zu passieren, wenn die Kappe (1) die Füllöffnung verschließt, und
**dadurch gekennzeichnet, dass**, wenn die Kappe (1) die Füllöffnung verschließt, ein Pfad, der einer wesentlichen Menge von Dämpfen erlaubt, zur Atmosphäre zu entweichen, bereitgestellt ist, so dass das gesamte Innenvolumen des Reservoirs 1 geteilt durch die Flussrate l/h durch die Membran bei 10 mbar geringer ist als 20 h.

2. System nach dem vorangehenden Anspruch, wobei der Tank aus einem Plastikmaterial besteht und ein Füllrohr aufweist, das die Füllöffnung aufweist, wobei das Füllrohr und die Kappe (1) aus Plastikmaterial geformt sind und entsprechende Gewindebereiche aufweisen.

3. System nach einem der vorangehenden Ansprüche, wobei die semi-permeable Membran (4) dazu ausgelegt ist, nicht mehr als 100 mbar Überdruck zu erlauben.

4. System nach einem der vorangehenden Ansprüche, in dem die semi-permeable Membran (4) einen Stoff aufweist, der unter dem Handelsnamen GORE-TEX^{®} erhältlich ist.

5. System nach einem der vorangehenden Ansprüche, wobei die semi-permeable Membran (4) Öffnungen aufweist, die in ihrer Größe im Bereich von 0,05 µm bis 10 µm liegen, und eine Dicke von 50 µm bis 250 µm hat.

6. System nach einem der vorangehenden Ansprüche, wobei die semi-permeable Membran (4) durch Schweißen an der Kappe fixiert ist.

7. System nach einem der vorangehenden Ansprüche, bei dem die Kappe (1) einen Körper aufweist, der ein Hohlteil mit einer Bohrung, die eine allgemein zylindrische Passage definiert, ist, wobei die Membran (4) im Wesentlichen rechtwinklig zu ihrer Achse fixiert ist, so dass der gesamte Querschnitt desselben belegt ist.

8. System nach dem vorangehenden Anspruch, wobei die Membran einen Membranhalter aufweist, an den die Membran peripher angeschweißt ist, wobei der Membranhalter (4) wiederum an dem Körper der Kappe fixiert ist, vorzugsweise ebenso durch Anschweißen.

9. System nach einem der vorangehenden Ansprüche, wobei die Kappe (1) eine ebene, kreisförmige Dichtung (5) beinhaltet, die kleine Öffnungen aufweist.

10. System nach dem vorangehenden Anspruch, wobei die Kappe eine Unterschneidung (6) aufweist, auf die die Dichtung (5) komprimiert werden kann, und eine innere konische Oberfläche, die eine geneigte konische Fläche bereitstellt zwischen der Membran und der Unterschneidung (6).

11. System nach einem der vorangehenden Ansprüche, aufweisend eine Abdeckung, die mechanisch an dem oberen Bereich der Kappe (1) fixiert ist.

12. System nach dem vorangehenden Anspruch, wobei die Abdeckung mindestens eine Öffnung in der Form eines Schlitzes aufweist.

13. System nach dem vorangehenden Anspruch, wobei die Öffnung in der Seitenwand der Abdeckung ist.

14. System nach einem der vorangehenden Ansprüche, wobei der Druckabfall durch den Dampfpfad stromabwärts der Membran mindestens 20, vorzugsweise 15 und stärker bevorzugt 10 Mal geringer ist als der Druckabfall über die Membran.

15. System nach einem der vorangehenden Ansprüche, wobei der Tank eine Wand hat, die aus Polyethylen, vorzugsweise HDPE von hoch-dichtem Polyethylen, besteht, und wobei die Kappe, die Abdeckung und das Gehäuse aus Polyamid PA, wie PA6 zum Beispiel, oder Polyacetal und vorzugsweise POM, Poly-Oxy-Methylen, besteht.

## Revendications

1. Système destiné à stocker un précurseur de l'ammoniac, comportant :
- un réservoir configuré pour contenir le précurseur de l'ammoniac,
- une ouverture de remplissage fermée par un capuchon (1), ledit capuchon (1) pouvant être enlevé pour re-remplir le réservoir, et
- une membrane semi-perméable (4) positionnée à l'intérieur dudit capuchon (1),
dans lequel la membrane semi-perméable (4) est configurée pour bloquer du liquide provenant du précurseur d'ammoniac et configurée pour permettre à de l'air et des vapeurs provenant du précurseur d'ammoniac de passer à travers celle-ci lorsque le capuchon (1) ferme l'ouverture de remplissage, et **caractérisé en ce que** lorsque le capuchon (1) ferme l'ouverture de remplissage, un chemin permettant à une quantité importante de vapeurs de s'échapper du réservoir dans l'atmosphère, est créé de sorte que le volume interne total du réservoir I devisé par le débit l/h à travers la membrane à 10 mbar est inférieur à 20 h.

2. Système selon la revendication précédente, dans lequel le réservoir est constitué de matière plastique et comporte un tuyau de remplissage comportant l'ouverture de remplissage, le tuyau de remplissage et le capuchon (1) étant moulés à partir d'une matière plastique et comportant des parties filetées correspondantes.

3. Système selon l'une quelconque des revendications précédentes, dans lequel la membrane semi-perméable (4) est configurée pour permettre une surpression non supérieure à 100 mbar.

4. Système selon l'une quelconque des revendications précédentes, dans lequel la membrane semi-perméable (4) comporte un tissu disponible sous le nom commercial GORE-TEX^{®}.

5. Système selon l'une quelconque des revendications précédentes, dans lequel la membrane semi-perméable (4) inclut des ouvertures dont la taille varie de 0,05 µm à 10 µm et a une épaisseur de 50 µm à 250 µm.

6. Système selon l'une quelconque des revendications précédentes, dans lequel la membrane semi-perméable (4) est fixée au capuchon par soudage.

7. Système selon l'une quelconque des revendications précédentes, dans lequel le capuchon (1) comporte un corps qui est une pièce creuse ayant un alésage définissant un passage généralement cylindrique où la membrane (4) est fixée de manière sensiblement perpendiculaire à son axe de manière à occuper une section complète de celle-ci.

8. Système selon la revendication précédente, dans lequel le capuchon (1) comporte un support de membrane auquel la membrane (4) est soudée de manière périphérique, ledit support de membrane (4) étant à son tour fixé dans le corps du capuchon (1), de préférence également par soudage.

9. Système selon l'une quelconque des revendications précédentes, dans lequel le capuchon (1) incorpore un joint circulaire plat (5) comportant de petits orifices.

10. Système selon la revendication précédente, dans lequel le capuchon comporte une contre-dépouille (6) sur laquelle le joint (5) peut être comprimé et une surface conique intérieure fournissant une surface conique inclinée entre la membrane et la contre-dépouille (6).

11. Système selon l'une quelconque des revendications précédentes, comportant un couvercle mécaniquement fixé sur le dessus du capuchon (1).

12. Système selon la revendication précédente, dans lequel le couvercle comporte au moins une ouverture ayant la forme d'une fente.

13. Système selon la revendication précédente, dans lequel ladite ouverture est dans la paroi latérale du couvercle.

14. Système selon l'une quelconque des revendications précédentes, dans lequel la chute de pression à travers le chemin de vapeur en aval de la membrane est au moins 20, de préférence 15 et de manière encore plus préférée, 10 fois inférieure à la chute de pression à travers la membrane.

15. Système selon l'une quelconque des revendications précédentes, dans lequel le réservoir a une paroi en polyéthylène, de préférence du HDPE (polyéthylène à haute densité), et dans lequel le capuchon, le couvercle et le boîtier sont en polyamide, tel que du PA 6 par exemple, ou en polyacétal et de préférence en POM ou poly-oxy-méthylène.
